# EUROPEAN PATENT SPECIFICATION

(11) **EP 0 568 153 B1**
(45) Date of publication and mention of the grant of the patent: **31.07.1996**
(21) Application number: 93201197.6
(22) Date of filing: 26.04.1993
(51) Int. Cl.: A01C 3/02, A01K 1/00, F24D 11/00

(54) **A method for regulating the temperature in a stable**
Verfahren zur Temperaturregelung in einem Stall
Procédé de réglage de température dans une étable

(30) Priority: 27.04.1992 NL 9200757
(43) Date of publication of application: 03.11.1993
(73) Proprietor: INSTALLATIE TECHNIEK BOXMEER B.V., NL-5830 AE Boxmeer (NL); Manders, Johannes Adrianus, 5374 AE Schaijk (NL)
(72) Inventor: Manders, Johannes Adrianus, NL-5374 AE Schaijk (NL); V.D. Laar, Antonius Martinus Maria, NL-5835 BL Beugen (NL)
(74) Representative: Van kan, Johan Joseph Hubert, Ir.

(56) References cited:
- DE-A- 2 754 032
- DE-A- 2 927 014
- DE-A- 2 928 627
- US-A- 4 176 788
- US-A- 4 476 921

## Description

The invention relates to a method for regulating the temperature in a stable by passing air which is supplied to the stable for its ventilation through a heat exchanger and bringing the temperature of the air to a desired substantially constant level by means of an exchange of heat between liquid manure and the air.

Such a method is known from US-A- 4,476,921 disclosing the regulation of the temperature in a building by making use of heat present in manure, groundwater or obtained from solar collectors being supplied to a heat exchanger. However from this patent it is unknown to cool the liquid manure again in order to avoid the production of ammonia, set free from the manure.

According to DE-A-2,754,032 liquid manure at first is treated with oxygen or air so that an oxidation takes place which oxidation causes an elevation of the temperature to 30-50 °C. This preheated liquid manure has then directly or indirectly been supplied to a heat exchanger. According to the invention, it is possible to make use of the liquid manure without carrying out the oxidation step.

For animals in stables, such as poultry, pigs, cows and the like it is important that a substantially constant temperature is maintained in the stable, without this taking up too much energy. In order to achieve this heat exchangers are used, whereby a cold liquid is passed through the heat exchanger in the summer and whereby the ambient air, which is supplied to the stable as ventilating air, is cooled down. In the winter a relatively warm liquid is supplied to the heat exchanger and the cold ambient air is heated in the heat exchanger, so that ventilating of an at least substantially constant temperature is supplied to the stable, independent of the temperature of the outside air.

Because a large amount of ventilating air is required it takes up a great deal of energy to reach the desired temperature in practice. A solution has now been found, whereby an inexpensive energy source has been discovered, whilst bringing the liquid supplied to the heat exchanger to a predetermined temperature moreover has additional advantages.

The method according to the invention is characterized in that an additional exchange of heat between liquid manure and groundwater is effected in said heat exchanger.

In a pit the temperature of the liquid manure at the bottom side, i.e. at the bottom of the pit, is about 12 °C, whilst at the upper side the temperature of the liquid manure is higher, viz. about 20 °C.

In the winter season liquid manure having a temperature of about 20 °C is supplied to the heat exchanger, and the liquid manure is used as a source of heat for raising the temperature of the outside air supplied to the stable as ventilating air. This outside air has a temperature of for example 0 °C. The temperature of the air can then be raised to for example 15 - 17 °C and the liquid manure can be cooled down to for example 5 °C. An additional advantage of the liquid manure having a low temperature is that the fermentation process takes place at a slow rate, so that less ammonia is produced, which may be considered a considerable advantage from an environmental point of view. If the heat capacity of the liquid manure should appear to be insufficient, it is of course possible to heat the air additionally, for example electrically, but the amount of energy won by using the liquid manure is substantial.

In the summer the outside air supplied to the stable as ventilating air is cooled down from for example 25 °C to 15 °C. This is achieved with liquid manure present at the bottom of the pit, which has a temperature of for example 12 °C. The temperature of the liquid manure is raised to for example 17 °C in the heat exchanger. If it is desired to keep the liquid manure at a relatively low temperature, it is possible to couple the heat exchanger to groundwater having a temperature of for example 8 °C.

In order to prevent raising the temperature of the liquid manure, in view of the production of ammonia, it is possible now to cool the ventilating air directly with groundwater or to partially re-cool the liquid manure with groundwater.

The construction of the heat exchanger which is used according to the invention is preferably such that the liquid is supplied to the pipes and the air is passed through the open space. The heat exchanger is substantially made of polyvinyl chloride, having pipes with such a thickness that a sufficient exchange of heat can be obtained.

The amounts of air required for a certain stable and also the amounts of heating medium or cooling medium from the liquid manure depots may be ascertained empirically by a person skilled in this field of the art.

## Claims

1. A method for regulating the temperature in a stable by passing the air which is supplied to the stable for its ventilation through a heat exchanger and bringing the temperature of the air to the desired substantially constant level by means of an exchange of heat between liquid manure coming from a storage pit present in the ground near the stable and the air, characterized in that an additional exchange of heat between liquid manure and groundwater is effected in said heat exchanger.

2. A method according to claim 1, characterized in that in the summer relatively cool liquid manure from the bottom side of the pit is supplied to the heat exchanger and in the winter relatively warm liquid manure from the upper side of the pit is supplied to the heat exchanger.

## Patentansprüche

1. Verfahren zum Regulieren der Temperatur in einem Stall, wobei die dem Stall zu seiner Belüftung zugeführte Luft durch einen Wärmetauscher durchgeleitet wird und wobei die Temperatur der Luft auf das gewünschte, im wesentlichen konstante Niveau mittels Wärmeaustausch gebracht wird zwischen flüssigem Mist, der aus einer Speichergrube stammt, welche in dem Boden in der Nähe des Stalls vorhanden ist und der Luft, dadurch gekennzeichnet, daß ein zusätzlicher Wärmeaustausch zwischen flüssigem Mist und Grundwasser in dem Wärmetauscher erfolgt.

2. Verfahren nach Anspruch 1, dadurch gekennzeichnet, daß im Sommer relativ kühler flüssiger Mist vom Bodenbereich der Grube dem Wärmetauscher zugeführt wird und daß im Winter relativ warmer flüssiger Mist aus dem oberen Teil der Grube dem Wärmetauscher zugeführt wird.

## Revendications

1. Procédé de régulation de la température d'une étable dans lequel on fait passer, à travers un échangeur de chaleur, l'air qui est fourni à l'étable pour sa ventilation et on porte la température de l'air au niveau désiré sensiblement constant au moyen d'a échange de chaleur entre du purin provenant d'une fosse de stockage présente dans le sol, à proximité de l'étable, et l'air, caractérisé en ce qu'on effectue, dans l'échangeur de chaleur, un échange additionnel de chaleur entre le purin et l'eau du sol.

2. Procedé suivant la revendication 1 caractérisé en ce qu'en été on fournit à l'échangeur de chaleur du purin relativement froid provenant de la partie inférieure de la fosse et en hiver on fournit à l'échangeur de chaleur du purin relativement chaud provenant de la partie supérieure de la fosse.
